# EUROPÄISCHE PATENTSCHRIFT

(11) **EP 1 589 627 B1**
(45) Veröffentlichungstag und Bekanntmachung des Hinweises auf die Patenterteilung: **21.03.2007**
(21) Anmeldenummer: 04405728.9
(22) Anmeldetag: 23.11.2004
(51) Int. Cl.: H02G 5/02

(54) **Befestigungs- und Hebevorrichtung für Stromschienen**
Device vor lifting and fastening busbars
Dispositif de levage et de fixation pour barres omnibus

(30) Priorität: 20.04.2004 CH 6952004
(43) Veröffentlichungstag der Anmeldung: 26.10.2005
(73) Patentinhaber: ZURECON AG, CH-8003 Zürich (CH)
(72) Erfinder: Fedier, Peter, 5033 Buchs (CH)
(74) Vertreter: Rutz, Peter

(56) Entgegenhaltungen:
- DE-A- 10 159 294
- US-A1- 2003 000 733
- US-A1- 2003 036 297

## Beschreibung

Die Erfindung betrifft Befestigungsvorrichtungen für Stromschienen und Hebevorrichtungen, die für die Montage der Stromschienen in den Befestigungsvorrichtungen vorgesehen sind, nach dem Oberbegriff des Patentanspruchs 1 bzw. 8.

Stromschienen und Vorrichtungen zu deren Montage sind beispielsweise aus [1], Produktkatalog "Niederspannungs-Schienenverteiler LANZ HE 2.5.2" der LANZ OENSINGEN AG vom März 2000 bekannt. Möglich ist ferner die Verwendung von Montagevorrichtungen, die aus [2], "MULTIFIX" Produktkatalog der LANZ OENSINGEN AG vom August 2001 bekannt sind.

Stromschienen bzw. Stromschienenverteiler werden als Übertragungsleitungen zwischen Transformator, Haupt- und Unterverteilern in Gebäuden oder Anlagen eingesetzt, in denen grosse Ströme zu übertragen sind. Typischerweise werden Stromschienen in Fabrikhallen, Gewerbe- und Verwaltungsgebäuden oder auch als Steigleitungen in Hochbauten eingesetzt.

Zur Minimierung von durch den Skineffekt verursachten Verlusten werden normalerweise Stromschienen mit mehreren, allgemein n mal m Kupfer- oder Aluminium-Leitern verwendet, die einen rechteckigen Querschnitt mit hohem Unterschied von Länge und Breite aufweisen. Einzelne Stromschienenbauteile, die beispielsweise in Giessharz (Polymerbeton) vergossen oder in Blech gekapselt sind, können dabei ein Gewicht von bis zu 400 kg und mehr aufweisen.

Zur Verbindung der einzelnen Stromschienenbauteile sind Kupplungen verwendbar, wie sie in [1], Seite 9 beschrieben sind. Durch diese Kupplungen erfolgt dabei eine elektrische und mechanische Kopplung.

Eine Stromschienenbefestigungsvorrichtung nach dem Oberbegriff des Anspruchs 1 ist aus DE 101 59 294 bekannt.

Die Installation von Leitungen, Einrichtungen und Geräten am und im Baukörper wird traditionellerweise Monteuren auf der Baustelle überlassen, welche nicht auf die Installation von Stromschienen spezialisiert sind und fallweise die benötigten Befestigungs- und Montagemittel beschaffen. Zum Anheben von schweren Stromschienen mit einem Gewicht von über 50 kg wird normalerweise Hebezeug verwendet. Bei schweren Stromschienen besteht dabei oft das Problem, dass diese Hebevorrichtungen ungenügend dimensioniert sowie umständlich zu montieren und mit den Stromschienen zu beladen sind.

Beispielsweise werden Gabelstapler verwendet, mittels denen schwere Stromschienen angehoben und anschliessend von der Liftgabel auf eine Auflagefläche der Befestigungsvorrichtung umgeladen werden. Dieser Umladevorgang ist nach dem Anheben der Stromschienen schwierig durchzuführen und stellt meist ein Sicherheitsrisiko dar. Eine rasche, effiziente und sichere Installation der Stromschienen ist mit den bekannten Mitteln kaum möglich. Ferner ist bei bekannten Befestigungs- und Hebevorrichtungen der Umladevorgang nur möglich, wenn ein relativ grosser Abstand von der Decke vorhanden ist. Dadurch gelingt es nicht, die Stromschienen unmittelbar angrenzend an die Decke zu montieren.

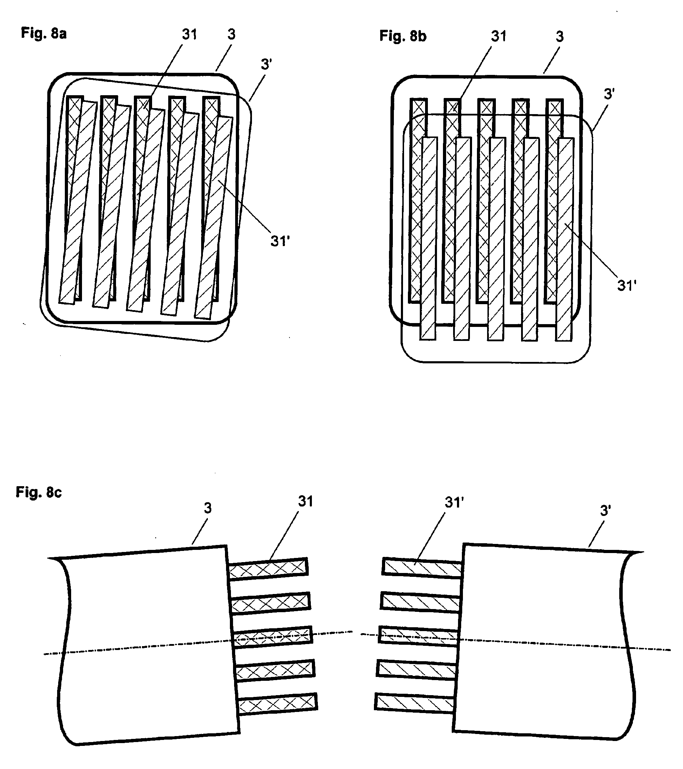

Die bei der Installation von Stromschienen entstehenden Probleme werden zudem oft unterschätzt. Zu berücksichtigen ist, dass Stromschienen kurze, relativ dicke (z.B. 10 mm) und hohe (bis zu 25 cm) Anschlusslaschen aufweisen, die mit engen Toleranzen gefertigt sind, wobei zwischen den Anschlusslaschen wenig Spielraum vorhanden ist. Die gegenseitige Kopplung von Stromschienen erfordert daher Präzisionsarbeit. Bei der Installation der Stromschienen treten somit selbst bei Verwendung bisher empfohlener Befestigungsvorrichtungen (siehe [1], Seiten 10 und 11) die in Figur 8a bis 8c dargestellten Probleme auf.

Die beiden in Figur 8a schematisch dargestellten, gegeneinander gerichteten Enden von Stromschienen 3, 3' sind verkantet bzw. verdreht. Die beiden in Figur 8b gezeigten Stromschienen 3, 3' sind nicht in einer Ebene ausgerichtet; d.h. deren Achsen sind parallel ausgerichtet, jedoch vertikal und horizontal gegeneinander verschoben. Die beiden in Figur 8c gezeigten Stromschienen 3, 3' sind nicht parallel aufeinander ausgerichtet. Typischerweise treten diese Fehlausrichtungen in Kombination auf. Beispielsweise sind die zu verbindenden Stromschienen gegeneinander verdreht und nicht achsparallel ausgerichtet.

Die Montage der Kupplung zur Verbindung der Anschlusslaschen erfordert vorgängig ein präzises gegenseitiges Ausrichten der einzelnen Stromschienenbauteile.

Der vorliegenden Erfindung liegt daher die Aufgabe zugrunde, eine verbesserte Befestigungsvorrichtung für Stromschienen und eine entsprechende Hebevorrichtung, die für die Montage der Stromschienen in dieser Befestigungsvorrichtung geeignet ist, zu schaffen.

Insbesondere ist eine kostengünstig herstellbare Befestigungsvorrichtung zu schaffen,
a) in die die zu installierenden schwere Stromschienen problemlos und sicher eingeführt und nahe der Decke montiert werden können,
b) mittels der eine ungenügende Ausrichtung der Stromschienen leicht korrigierbar sind,
c) mittels der die installierten Stromschienen stabil gehalten werden.

Weiterhin soll die Einwirkung störender Kräfte auf die gekoppelten Leiterenden oder auf Elemente der Kupplung vermieden werden.

Ferner soll die Befestigungsvorrichtung die Kopplung von Stromschienen auch an Stellen erlauben, an denen konventionelle Befestigungsvorrichtungen nur schwierig montierbar sind.

Die Hebevorrichtung soll das einfache und sichere Montieren schwerer Stromschienen in den erfindungsgemässen Befestigungsvorrichtungen, insbesondere nahe der Decke erlauben.

Diese Aufgaben werden mit einer Befestigungsvorrichtung und einer Hebevorrichtung gelöst, welche die in Anspruch 1 bzw. 8 angegebenen Merkmale aufweisen. Vorteilhafte Ausgestaltungen der Erfindung sind in weiteren Ansprüchen angegeben.

Die Befestigungsvorrichtung, die der Installation von Stromschienen im Bereich der Decke eines Gebäudes dient, weist eine mit der Decke verbindbare Haltevorrichtung und ein zum Tragen wenigstens einer Stromschiene dienendes Tragelement auf.

Erfindungsgemäss ist das Tragelement derart an der Unterseite der Haltevorrichtung montierbar und demontierbar, dass die zu installierende Stromschiene, nach der Demontage des Tragelements, senkrecht von unten in die Haltevorrichtung einführbar und das Tragelement nach dem Einführen der Stromschiene mit der Haltevorrichtung verbindbar und die eingeführte Stromschiene anschliessend wieder senkrecht auf das Tragelement absenkbar ist.

Die schweren Stromschienen lassen sich erfindungsgemäss von unten senkrecht mittels einer entsprechend ausgestalteten Hebevorrichtung in die Haltevorrichtung einführen und auf das eingesetzte Tragelement absenken. Ein normalerweise mit Schwierigkeiten verbundenes seitliches Verschieben der Stromschienen entfällt.

Die Haltevorrichtung weist vorzugsweise ein mit der Decke verbindbares erstes Profilteil und wenigstens ein vorzugsweise senkrecht darunter hängendes zweites Profilteil auf, das mit Öffnungen versehen ist, welche erlauben, das Tragelement seitlich darin einzusetzen. Das zweite Profilteil kann ferner ein Gewinde aufweisen, das durch eine Öffnung im Tragelement durchführbar und mit einer Schraubenmutter verbindbar ist. Das Tragelement kann nach dem Einführen der Stromschienen somit rasch und bequem montiert werden. Das Tragelement, das vorzugsweise aus zwei gegeneinander justierbaren Teilen besteht, kann nur an einem oder auch an zwei zweiten Profilteilen befestigt werden. Nach der Installation der Stromschienen können diese, beispielsweise mittels zwei Schrauben, bezüglich der Höhe und der Neigung justiert werden, um eine präzise gegenseitige Ausrichtung von miteinander zu verbindenden Stromschienen zu erzielen.

Zur parallelen Montage mehrerer Stromschienen kann beidseitig eines zweiten Profilteils je ein Tragelement montiert werden. Ferner können zwei und mehr zweite Profilteile vorgesehen werden, zwischen denen Stromschienen installiert werden.

In einer weiteren vorzugsweisen Ausgestaltung ist die Haltevorrichtung, vorzugsweise das erste oder ein drittes Profilteil, mit Montageelementen versehen, die mit wenigstens einem Zugelement, einem Seil oder einer Kette, einer Hebevorrichtung verbindbar sind, mittels der die Stromschienen angehoben werden.

Das dritte Profilteil, sofern vorgesehen, ist derart mit der Haltevorrichtung verbunden, dass das wenigstens eine Zugelement, in Richtung des Verlaufs der zu installierenden Stromschienen, derart vor oder hinter der Haltevorrichtung befestigbar ist, dass beim Einziehen der Stromschienen eine Kollision zwischen der Hebevorrichtung und der Befestigungsvorrichtung vermieden wird. Alternativ kann die Hebevorrichtung mit einer Ausnehmung versehen sein, durch die Profilteile der Haltevorrichtung und das Tragelement, während des Hochziehens der Stromschienen, hindurch treten können.

Die erfindungsgemässe Hebevorrichtung weist eine der Aufnahme einer Stromschiene dienende Tragvorrichtung auf, die beidseitig mittels eines durchlaufenden Zugelements oder die beidseitig je mittels eines einzelnen Zugelements mit Montageelementen der Haltevorrichtung verbindbar und mittels des oder der Zugelemente derart hochziehbar ist, dass die gehaltene Stromschiene in die Haltevorrichtung einziehbar und mittels des Tragelements arretierbar ist.

Die seitliche Anordnung von Teilen eines Zugelements bzw. von zwei Zugelementen erlaubt, die mit einer Stromschiene beladene Tragvorrichtung soweit gegen die Decke hochzuziehen, bis die Stromschiene an der Decke oder an einem Teil, beispielsweise an dem mit der Decke verbundenen ersten Profilteil anstösst. Sofern die zweiten Profilteile auf mehreren Ebenen vorgesehene Öffnungen aufweisen, kann zudem eine optimale Höhe des Tragelements gewählt werden. Für die Installation einer Stromschiene an Decken werden vorzugsweise gleichzeitig zwei Befestigungsvorrichtungen und zwei Hebevorrichtungen verwendet. Die Hebevorrichtungen können manuell oder motorisch angetrieben werden. Sofern Motoren für den Antrieb der Hebevorrichtungen vorgesehen sind, werden diese vorzugsweise mittels einer gemeinsamen Steuervorrichtung synchron betätigt.

Nachfolgend wird die Erfindung, einschliesslich weiterer vorzugsweiser Ausgestaltungen anhand von Zeichnungen näher erläutert. Dabei zeigt:
- Figur 1: eine erfindungsgemässe Hebevorrichtung 4, mittels der zwei Stromschienen 3 in eine erfindungsgemässe Befestigungsvorrichtung 1 hochgezogen werden, die eine aus zwei Profilteilen 11, 12 bestehende Haltevorrichtung 11, 12 und ein damit verbindbares Tragelement 13 aufweist;
- Figur 2: die Befestigungsvorrichtung 1 und die Hebevorrichtung 4 von Figur 1 nach dem Hochziehen der Stromschienen 3;
- Figur 3: die Befestigungsvorrichtung 1 von Figur 2 mit montiertem Tragelement 13 und installierten Stromschienen 3;
- Figur 4: eine der Installation von mehreren Gruppen von Stromschienen 3 dienende Befestigungsvorrichtung 1, deren Haltevorrichtung 11, 12 ein erstes mit der Decke verbundenes Profilteil 11 aufweist, das mit drei zweiten Profilteilen 12 verbunden ist, zwischen denen die Stromschienen 3 installierbar sind und das gleichzeitig der Befestigung der Hebevorrichtung 4 dient;
- Figur 5: ein aus zwei mittels Schrauben 133 gegeneinander justierbaren Teilen 131, 132 bestehendes Tragelement 13, das in eines oder zwischen zwei der in Figur 4 gezeigten zweiten Profilteile 12 einsetzbar ist;
- Figur 6: eine Befestigungsvorrichtung 1 mit nur einem zweiten Profilteil 12, an dem ein Tragelement 13 einseitig einsetzbar ist und eine Hebevorrichtung 4 mit einer Antriebseinheit 46, die beidseits der Tragvorrichtung 41 vorgesehene Zugelemente 45, 45' erfasst, die mit dritten Profilteilen 14 der Haltevorrichtung 11, 12 verbunden sind;
- Figur 7: eine Befestigungsvorrichtung 1 mit zwei zweiten Profilteilen 12, die beim Hochziehen der Tragvorrichtung 41 in darin vorgesehene Öffnungen 410 einführbar sind; und
- Figur 8: in schematischer Darstellung nicht korrekt aufeinander ausgerichtete Endstücke von Stromschienen 3, 3'.

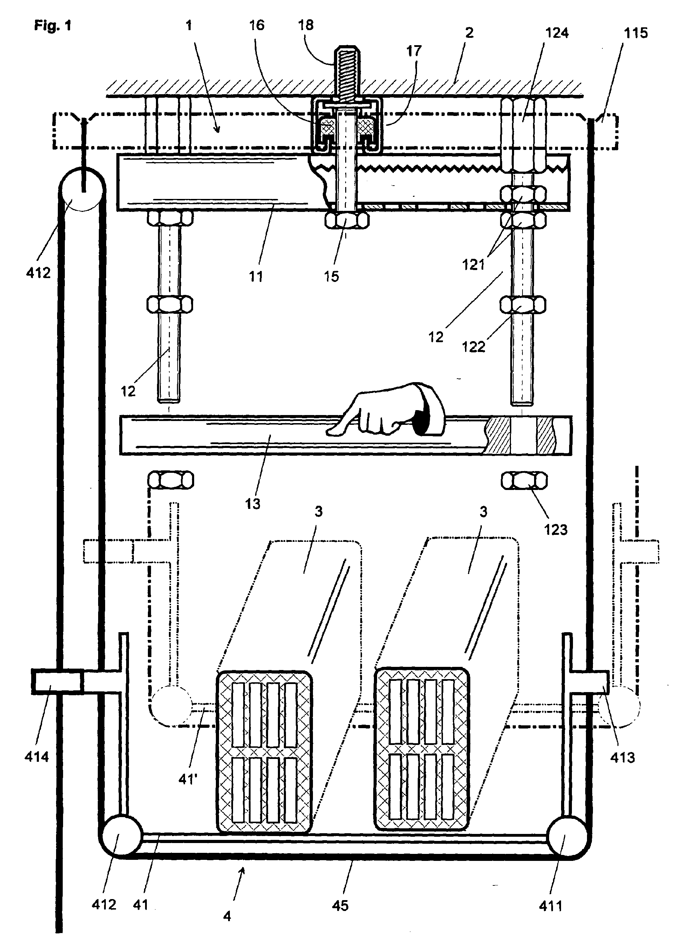

Figur 1 zeigt eine erfindungsgemässe Befestigungsvorrichtung 1, die im Wesentlichen eine Haltevorrichtung 11, 12 mit einem mit der Decke 2 eines Gebäudes verbundenen ersten Profilteil 11 und zwei zweiten Profilteilen 12 aufweist, die mit dem ersten Profilteil 11 verbunden und senkrecht dazu ausgerichtet sind. Das erste Profilteil 11 ist mittels einer Schraube 15 und einem mit einem Gewinde versehenen Konterelement 16 an einer wählbaren Position mit einer Schiene 17 verbunden, welche mittels einer Schraube und einem Dübel 18 an der Decke 2 befestigt ist. Die beiden zweiten Profilteile 12 sind als Gewindestangen ausgebildet und mittels Schraubenmuttern 121 mit dem ersten Profilteil 11 verbunden und nach dem Einführen der Stromschienen 3 mittels Schrauben 122, 123 mit einem Tragelement 13 verbindbar, auf das die Stromschienen 3 abgestützt werden. Deckenseitig sind die zweiten Profilteile 12 mit Distanzmuttern 124 versehen, die gegen die Decke 2 gedreht werden, um die Befestigungsvorrichtung 1 präzise auszurichten und zu stabilisieren.

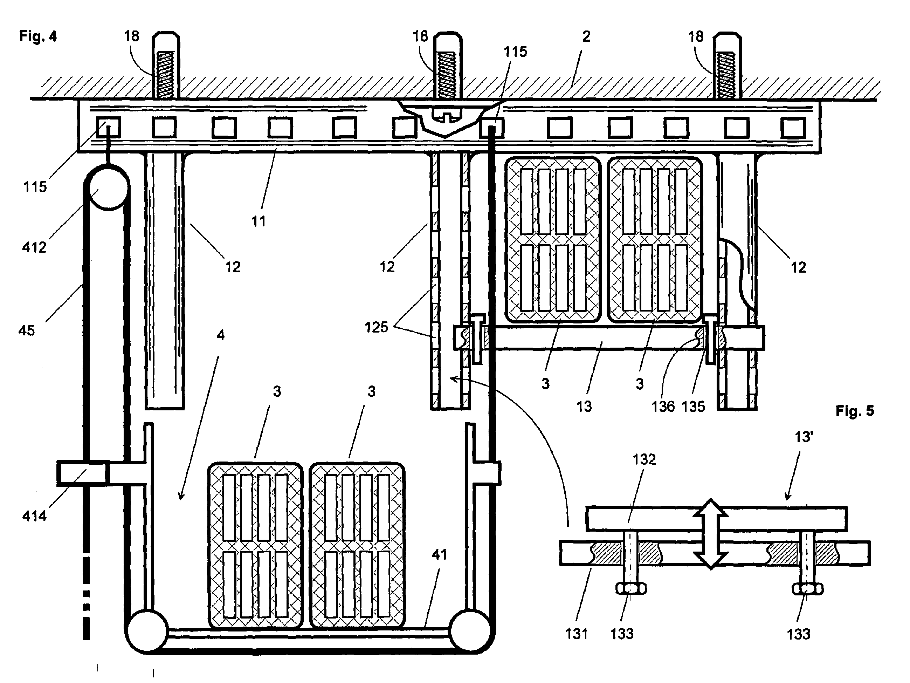

Schematisch ist ferner ein Montageelement 115 gezeigt, an dem ein Zugelement 45, ein Seil oder eine Kette, einer Hebevorrichtung 4 an einer Seite der Befestigungsvorrichtung 1 fest und an der anderen Seite mittels einer Rolle 412 gehalten ist. Nachstehend in den Figuren 4 bis 7 ist gezeigt, dass das Zugelement 45 oder zwei einzelne Zugelemente 45, 45' vorteilhaft direkt mit der Haltevorrichtung 11, 12, vorzugsweise mit dessen erstem oder einem dritten Profilteil 11 bzw. 14, verbunden werden.

Das Zugelement 45 dient zum vertikalen Aufziehen und Absenken einer Tragvorrichtung 41, die mit Stromschienen 3 beladbar ist. Nach dem Entfernen des Tragelements 13 von der Haltevorrichtung 11, 12 können die von der Tragvorrichtung 41 gehaltenen Stromschienen 3 durch Ziehen des Zugelements 45 vertikal in die Haltevorrichtung 11, 12 eingefahren werden, wonach das Tragelement 13 montiert und die Stromschienen 3 darauf abgesenkt werden.

Damit die Tragvorrichtung 41 ganz nach oben gefahren werden kann, ist das Zugelement 45, gelagert mittels Rollen 411, 412, unterhalb der Tragvorrichtung 41 hindurch geführt. Die Tragvorrichtung 41 ist in einer beidseits mit der Haltevorrichtung 11, 12 verbundenen Schlaufe des Zugelements 45 gehalten, so dass die Wirkung eines Flaschenzugs resultiert und die Tragvorrichtung und die damit gehaltenen Stromschienen mit der Hälfte der Gewichtskraft derselben nach oben gezogen werden können. Einerseits halbiert sich die Kraft, die für das Hochziehen erforderlich ist. Andererseits erlaubt die erfindungsgemässe Ausgestaltung der Hebevorrichtung 4, die Stromschienen 3 bis zur Decke 2 hochzuziehen, da keine Teile der Hebevorrichtung 4 zwischen dieser und dem betreffenden Deckenbereich vorhanden sind.

Die in einer vorzugsweisen Ausgestaltung schematisch gezeigte Tragvorrichtung 41 weist ein U-Profil mit einem Basiselement und Seitenelementen auf, an denen Führungsvorrichtungen 413 vorgesehen sind, mittels denen die Tragvorrichtung 41 entlang des wenigsten einen Zugelements 45 geführt wird. Dies ist beispielsweise von Bedeutung, wenn die unbeladene Tragvorrichtung 41 hochgefahren wird, um eine installierte Stromschiene 3 zu deinstallieren. Das freie Ende des Zugelements 45 ist durch eine mit der Tragvorrichtung 41 verbundene Sicherungsvorrichtung 414 gehalten, welche das Zugelement 45 nur in Zugrichtung passieren lässt und anschliessend arretiert. Eine derartige Sicherungsvorrichtung ist beispielsweise aus [3], EP 0 752 255 A1 bekannt. Die Rollen 411, 412, mittels denen das Zugelement 45 unter der Tragvorrichtung 41 durchgeführt und beidseitig nach oben umgelenkt wird, sind an den unteren Eckkanten des U-Profils beispielsweise mittels Achsen gelagert.

In Figur 1 ist ferner schematisch gezeigt, dass für die Installation von Stromschienen vorzugsweise zwei Befestigungsvorrichtungen und zwei Hebevorrichtungen vorgesehen werden, die vorzugsweise synchron gesteuert werden.

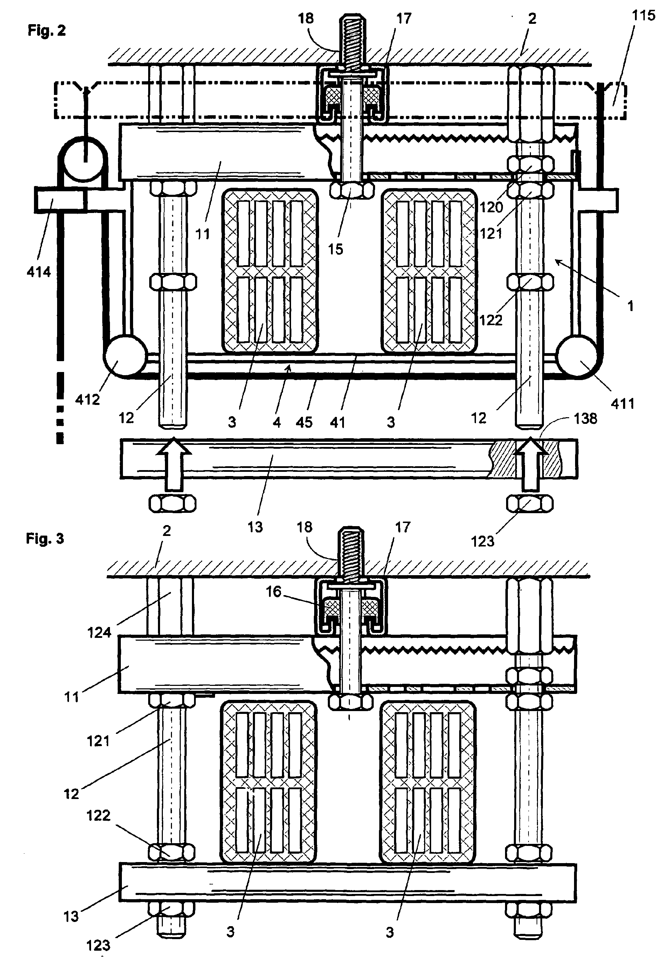

Figur 2 zeigt die Befestigungsvorrichtung 1 und die Hebevorrichtung 4 von Figur 1, nachdem die Stromschienen 3 mittels der Hebevorrichtung 4 bis zum ersten Profilteil 11 der Haltevorrichtung 11, 12 hochgezogen wurden. Zwischen der Decke 2 und den Stromschienen 3 liegt nur das erste Profilteil 11 und die darüber liegende Schiene 17, die in den in Figur 4 bis Figur 7 gezeigten Ausgestaltungen der Erfindung nicht vorgesehen ist. Zur weiteren Reduktion des Abstandes zur Decke 2 könnte das erste Profilteil 11 auch zweiteilig und/oder als Plattenelement ausgestaltet sein. Figur 2 zeigt weiter, dass das Tragelement 13 problemlos montiert werden kann, während die Stromschienen 3 mittels der Hebevorrichtung 4, beispielsweise mittels der Sicherungsvorrichtung 414, gehalten werden. Die Gewindestangen bzw. die zweiten Profilteile 12 werden durch Öffnungen 138 im Tragelement 13 hindurch geführt und an deren Enden mit Schraubenmuttern 123 versehen. Nach der korrekten Justierung des Tragelements 13 kann dieses mittels weiteren Schraubenmuttern 123, die oberhalb des Tragelements 13 angeordnet sind, fixiert werden.

Figur 3 zeigt die Befestigungsvorrichtung 1 von Figur 2 nach der Montage des Tragelements 13 mit den installierten Stromschienen 3. Die Hebevorrichtung 4 und das Montageelement 115 wurden entfernt.

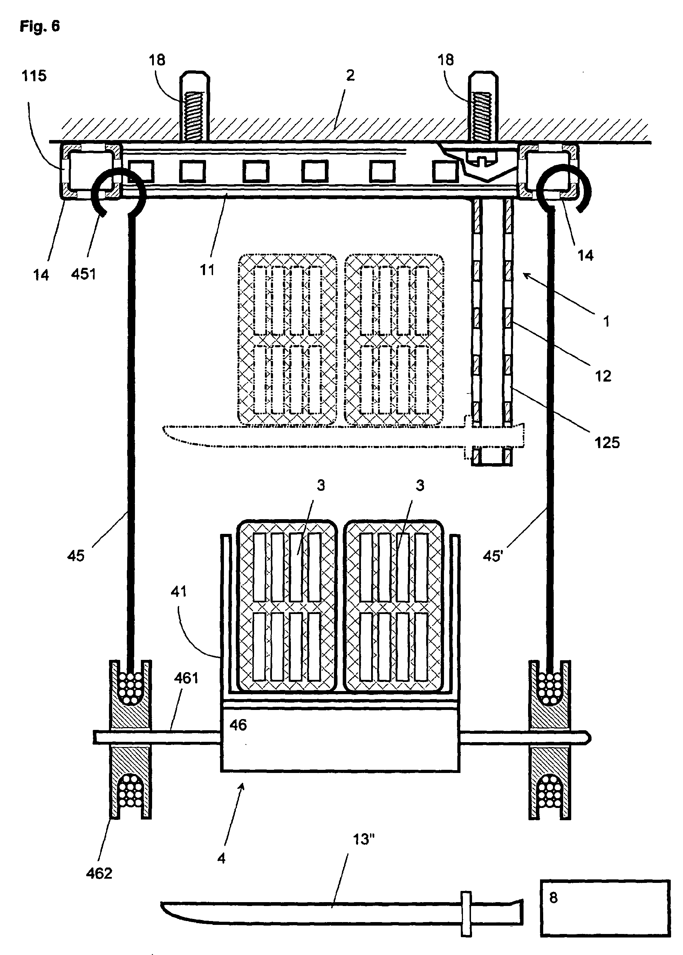

Figur 4 zeigt eine der Installationen von mehreren parallelen Stromschienen 3 dienende Befestigungsvorrichtung 1 deren Haltevorrichtung 11, 12 ein erstes mit der Decke verbundenes Profilteil 11 aufweist, das mit drei zweiten Profilteilen 12 verbunden ist, zwischen denen die Stromschienen 3 installierbar sind, und das gleichzeitig der Befestigung der Hebevorrichtung 4 dient. Bei dieser Ausgestaltung der erfindungsgemässen Befestigungsvorrichtung 1 können die Zugelemente 45, 45' der Hebevorrichtung 4 einfach und an wählbaren Positionen befestigt werden. Zusätzliche Montageelemente, die für die Installation der Stromschienen 3 montiert und anschliessend wieder demontiert werden, sind nicht notwendig. In der gezeigten Ausgestaltung weist das erste Profilteil 11 mehrere Eingänge 115 auf, die als Montagelemente dienen, und in die mit dem Zugelement 45 oder den Rädern 412 verbundene Verbindungselemente, beispielsweise die in Figur 6 schematisch gezeigten Haken 451, einführbar sind. Die Haken 451 können dabei in einen jeweils passenden Eingang 115 eingeführt werden. Entsprechend kann die Tragvorrichtung 41 aus zwei gegeneinander verschiebbaren Teilen, beispielsweise ineinander verschiebbaren Schienen, bestehen, so dass die Tragvorrichtung 3 an die zu tragenden Stromschienen 3 oder auch entsprechend der Position der zweiten Profilteile 12 angepasst werden kann.

In Figur 4 ist ferner gezeigt, dass die zweiten Profilteile 12 mit Öffnungen 125 versehen sind, in die das entsprechende Tragelement 13, 13', 13" (siehe die Figuren 5 und 6) in wählbarer Höhe einsetzbar ist. Das Tragelement 13, 13', 13" kann nur von einem zweiten Profilteil 12 oder, nachdem es seitlich eingeschoben oder von unten eingesetzt wurde, beidseitig von je einem zweiten Profilteil 12 gehalten werden. Vorzugsweise sind noch Arretierelemente vorgesehen, mittels derer das Tragelement 13 fixierbar ist. Beispielsweise ist im Tragelement 13 eine Öffnung 136 vorgesehen, in die ein Arretierbolzen 135 einsetzbar ist.

Figur 5 zeigt ein aus zwei mittels Schrauben 133 gegeneinander justierbaren Teilen 131, 132 bestehendes Tragelement 13', das in ein oder zwischen zwei der in Figur 4 gezeigten zweiten Profilteile 12 einsetzbar ist. Nach der Installation können die beiden Teile 131, 132 parallel gegeneinander verschoben oder auch geneigt werden, so dass sich die Anschlusslaschen der Stromschienenbauteile 3 präzise gegeneinander ausrichten lassen (siehe die einleitende Besprechung von Figur 8).

Figur 6 zeigt eine Befestigungsvorrichtung 1 mit nur einem zweiten Profilteil 12, an dem ein Tragelement 13 einseitig einsetzbar ist. Ferner gezeigt ist eine mit zwei Zugelementen 45, 45' und einer Antriebseinheit 46 versehene Tragvorrichtung 41. Die unterhalb der Tragvorrichtung 41 angeordnete Antriebseinheit 46 weist eine Antriebsachse 461 auf, die beidseits der Tragvorrichtung 41 hervorragt und an deren Enden Spulenräder 462 befestigt sind, die dem Auf- und Abwickeln der zugehörigen Zugelemente 45, 45' dienen, die an der Haltevorrichtung 11, 12 befestigt sind. Auf diese Weise lässt sich die Tragvorrichtung 41, beispielsweise gesteuert durch eine Steuereinheit 8 automatisch anheben und absenken.

Um eine Kollision mit dem zweiten Profilteil 12 oder mit dem daran montierten Tragelement 13 zu vermeiden, ist die Hebevorrichtung 4, gegenüber dem zweiten Profilteil 12 versetzt, an dritten Profilteilen 14 befestigt. Die dritten Profilteile 14 stehen senkrecht auf dem ersten Profilteil 11 und sind beispielsweise mit diesem verschweisst oder verschraubt. Die Tragvorrichtung 41 kann daher störungsfrei vor bzw. hinter der Befestigungsvorrichtung 1 hochgezogen werden.

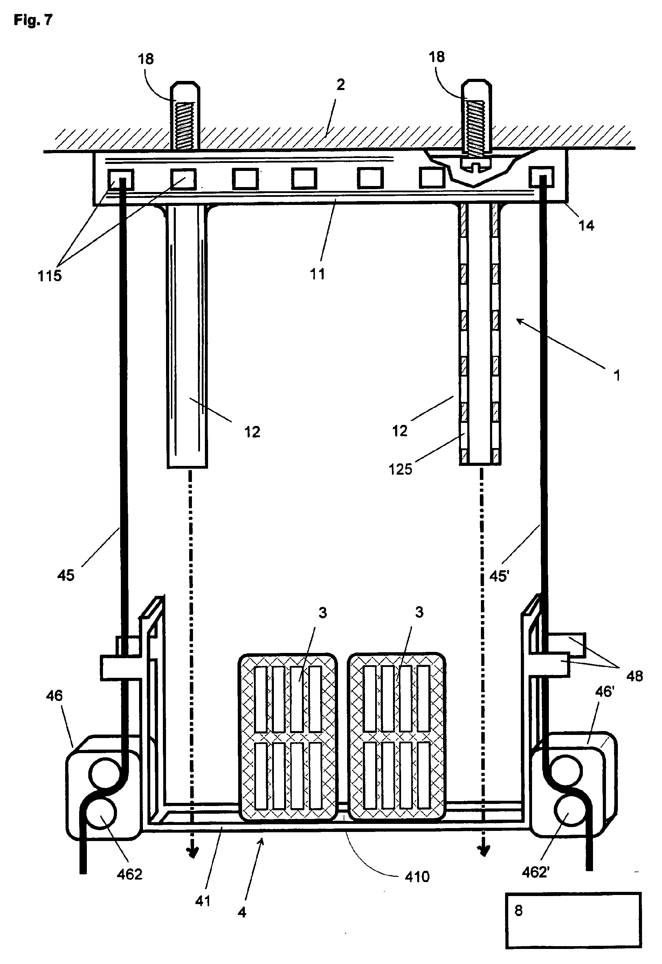

Figur 7 zeigt eine Tragvorrichtung 41 mit einer Ausnehmung 410, durch die die zweiten Profilteile 12 und das damit verbundene Tragelement 13 hindurch führbar sind. Die Hebevorrichtung kann daher genau unterhalb der Befestigungsvorrichtung 1 montiert werden, so dass die dritten Profilteile 14 entfallen können. Jedem der beiden Zugelemente 45, 45' ist bei dieser Ausgestaltung eine gesonderte Antriebseinheit 46 zugeordnet, die mittels Antriebselementen 462 an den Zugelementen 45, 45' hoch und runter fahren können. Beispielsweise sind Seil- oder Kettenzüge einsetzbar, die auch in der Bühnentechnik verwendet werden. Verwendbar ist beispielsweise die Seilwinde SW E 7 oder ein Pfaff Kettenhebezug PE 25/50/100, ... der Pfaff-silberblau Hebezeugfabrik GmbH, Äußere Industriestraße 18, 86316 Friedberg/Derching. Möglich ist die Verwendung weiterer Hebewerkzeug dieses Herstellers, wie Flaschenzüge oder Hebezüge.

## Patentansprüche

1. Befestigungsvorrichtung (1) für die Installation von Stromschienen (3) im Bereich der Decke (2) eines Gebäudes, mit einer mit der Decke (2) verbindbaren Haltevorrichtung (11, 12) und einem zum Tragen wenigstens einer Stromschiene (3) dienenden Tragelement (13), **dadurch gekennzeichnet, dass** das Tragelement (13) derart an der Unterseite der Haltevorrichtung (11, 12) montierbar und demontierbar ist, dass die zu installierende Stromschiene (3), nach der Demontage des Tragelements (13), senkrecht von unten in die Haltevorrichtung (11, 12) einführbar und das Tragelement (13) nach dem Einführen der Stromschiene (2) mit der Haltevorrichtung (11, 12) verbindbar und die eingeführte Stromschiene (2) auf das Tragelement (13) absenkbar ist.

2. Befestigungsvorrichtung (1) nach Anspruch 1, **dadurch gekennzeichnet, dass** die Haltevorrichtung (11, 12) ein erstes mit der Decke (2) verbindbares Profilteil (11) und wenigstens ein zweites, vorzugsweise senkrecht darauf stehendes Profilteil (12) aufweist, das nach der Montage der Haltevorrichtung (11, 12) zumindest annähernd parallel zur Gravitationsachse ausgerichtet ist, so dass die parallel zur Gravitationsachse zu vollziehende Einführung der Stromschiene (2) nicht behindert wird.

3. Befestigungsvorrichtung (1) nach Anspruch 2, **dadurch gekennzeichnet, dass** das zweite Profilteil (12) mit Öffnungen (125) versehen ist, welche erlauben, das Tragelement (13) seitlich darin einzuschieben oder von unten darin einzuführen oder dass das zweite Profilteil (12) ein Gewinde aufweist, das durch eine Öffnung (138) im Tragelement (13) durchführbar und mit einer Schraubenmutter (123) verbindbar ist.

4. Befestigungsvorrichtung (1) nach Anspruch 2 oder 3, **dadurch gekennzeichnet, dass** das Tragelement (13, 13") nur mit einem oder mit zwei zweiten Profilteilen (12) verbindbar ist und/oder, dass das Tragelement (13') aus zwei mittels wenigstens einer Schraube (133) gegeneinander justierbaren Teilen (131, 132) besteht.

5. Befestigungsvorrichtung (1) nach einem der vorhergehenden Ansprüche 1 bis 4, **dadurch gekennzeichnet, dass** zur parallelen Montage mehrerer Stromschienen (2) beidseitig eines zweiten Profilteils (12) je ein Tragelement (13") montierbar ist oder dass zwei oder mehrere zweite Profilteile (12) vorgesehen sind, an denen wenigstens zwei Tragelemente (13, 13', 13'') einseitig oder beidseitig montierbar sind.

6. Befestigungsvorrichtung (1) nach einem der vorhergehenden Ansprüche 1 bis 5, **dadurch gekennzeichnet, dass** die Haltevorrichtung (11, 12) direkt oder entlang einer Schiene (17) verschiebbar mit der Decke (2) verbunden ist und/oder dass die Haltevorrichtung (11, 12), vorzugsweise das erste Profilteil (11) oder ein drittes Profilteil (14), derart mit Montageelementen (115) versehen ist, mit denen wenigstens ein Zugelement (45, 45, 45') einer Hebevorrichtung (4) verbindbar ist, dass die zu installierende Stromschiene (3), nach der Demontage des Tragelements (13), mittels des wenigstens einen Zugelements (45; 45, 45') senkrecht von unten in die Haltevorrichtung (11, 12) einziehbar ist.

7. Befestigungsvorrichtung (1) nach einem der vorhergehenden Ansprüche 1 bis 6, **dadurch gekennzeichnet, dass** das dritte Profilteil (14) mit dem ersten und oder mit dem zweiten Profilteil (11; 12) derart verbunden ist, dass das wenigstens eine Zugelement (45; 45, 45'), in Richtung des Verlaufs der zu installierenden Stromschienen (3), derart vor oder hinter der Haltevorrichtung (11, 12) befestigbar ist, dass beim Einziehen der Stromschienen (3) eine Kollision zwischen der Hebevorrichtung (3) und der Befestigungsvorrichtung vermieden wird.

8. Hebevorrichtung (4) für wenigstens eine Stromschiene (3), die in einer Befestigungsvorrichtung (1) nach einem der Ansprüche 1 bis 6 zu installieren ist, welche eine mit der Decke (2) eines Gebäudes verbindbare Haltevorrichtung (11, 12) und ein zum Tragen wenigstens einer Stromschiene (3) dienendes Tragelement (13) aufweist, **dadurch gekennzeichnet, dass** wenigstens eine der Aufnahme der Stromschiene (3) dienende Tragvorrichtung (41) vorgesehen ist, die beidseitig mittels eines durchlaufenden Zugelements (45) oder die beidseitig je mittels eines einzelnen Zugelements (45, 45') mit Montageelementen (115) der Haltevorrichtung (11, 12) verbindbar ist und die mittels des oder der Zugelemente (45; 45, 45') derart hochziehbar ist, dass die gehaltene Stromschiene (3) in die Haltevorrichtung (11, 12) einziehbar und mittels des Tragelements (13) arretierbar ist.

9. Hebevorrichtung (4) nach Anspruch 8, **dadurch gekennzeichnet, dass** die ein oder mehrteilige Tragvorrichtung (41) ein U-Profil aufweist, in das die wenigstens eine Stromschiene (3) einlegbar ist und/oder die ein oder mehrteilige Tragvorrichtung (41) ein Profil wenigstens einer Ausnehmung (410) aufweist, in die wenigstens eines der Profilteile (11, 12) der Haltevorrichtung (11, 12), während des Hochziehens der Tragvorrichtung (41) einführbar ist.

10. Hebevorrichtung (4) nach Anspruch 8 oder 9, **dadurch gekennzeichnet, dass** die Tragvorrichtung (41) zwei Antriebe (46, 46'), wie Seil- oder Kettenzüge, oder einen einzigen Antrieb (46) aufweist, mittels denen bzw. dessen die Tragvorrichtung (41) entlang den Zugelementen (45, 45') verschiebbar ist
oder dass ein einzelnes Zugelement (45) vorgesehen ist, das an einem Ende an einer Seite der Haltevorrichtung (11, 12) befestigbar und, gegebenenfalls gelagert mittels Rollen (411), unter der Tragvorrichtung (41) durchgeführt und weiter über eine an der gegenüberliegenden Seite der Haltevorrichtung (11, 12) befestigbare Rolle (412) geführt ist.

11. Hebevorrichtung (4) nach Anspruch 8, 9 oder 10, **dadurch gekennzeichnet, dass** die Tragvorrichtung (41) mit Führungselementen (48) versehen ist, welche entlang den zugehörigen Teilen des einen Zugelements (45) bzw. entlang den beiden Zugelementen (45, 45') geführt sind, so dass die Tragvorrichtung (41) während des vertikalen Verschiebens stabil gehalten ist und/oder dass die Tragvorrichtung (41) mit einer Sicherungsvorrichtung (414) verbunden ist, durch die das freie Ende des Zugelements (45) geführt ist und die das Zugelement (45) nur in Zugrichtung passieren lässt.

12. Hebevorrichtung (4) nach einem der Ansprüche 8 bis 11, **dadurch gekennzeichnet, dass** die beiden Zugelemente (45, 45') bzw. das Zugelement (45) und zugehörige Rollen (412) mittels Verbindungselementen (451) mit der Haltevorrichtung (11, 12), vorzugsweise mit dem ersten mit der Decke (2) verbindbaren Profilteil (11) verbindbar sind.

## Claims

1. Mounting device (1) for the installation of busbars (3) in the range of the ceiling (2) of a building, with a holding device (11, 12) that can be connected to the ceiling (2) and with a bearing element (13) that serves for bearing at least one busbar (3), **characterised in that** the bearing element (13) can be mounted and dismounted at the lower side of the holding device (11, 12) in such a way, that the busbar (3), which is to be installed, can vertically be inserted into the holding device (11, 12) from below, after the bearing element (13) has been dismounted, and that the bearing element (13), after the busbar (2) has been inserted, can be connected to the holding device (11, 12) and that the inserted busbar (2) can be lowered onto the bearing element (13).

2. Mounting device (1) according to claim 1, **characterised in that** the holding device (11, 12) comprises a first profile element (11) that can be connected to the ceiling (2) and at least a second profile element (12), which preferably stands perpendicularly thereto, which, after mounting of the holding device (11, 12), is aligned at least approximately in parallel to the gravitation axis, so that insertion of the busbar (2), which will be performed in parallel to gravitation axis, is not obstructed.

3. Mounting device (1) according to claim 2, **characterised in that** the second profile element (12) comprises openings (125), into which the bearing element (13) is allowed to be inserted from the side or from below or that the second profile element (12) comprises a thread, which can be transferred through an opening (138) in the bearing element (13) and which can be connected to a screw-nut (123).

4. Mounting device (1) according to claim 2 or 3, **characterised in that** the bearing element (13, 13'') can be connected with one or with two second profile elements (12) only and/or, that the bearing element (13') consists of at least two parts (131, 132) which can adjusted against one another by means of at least one screw (133).

5. Mounting device (1) according to one of the preceding claims 1 to 4, **characterised in that;** for mounting a plurality of busbars (2) in parallel; on both sides of a second profile element (12) a bearing element (13") can be mounted or that two or more second profile elements (12) are provided, on which at least two bearing elements (13, 13', 13'') can be mounted on one side or on both sides.

6. Mounting device (1) according to one of the preceding claims 1 to 5, **characterised in that** the holding device (11, 12) is mounted to the ceiling (2) directly or mounted transferable along a rail (17) and/or that the holding device (11, 12), preferably the first profile element (11) or a third profile element (14), is provided with mounting elements (115), with which a pulling element (45, 45, 45') of a lift gear (4) can be connected, in such a way, that the busbar (3), which is to be installed, can be lifted vertically from below into the holding device (11, 12) by means of the at least one pulling element (45, 45, 45') after the bearing element (13) had been dismounted.

7. Mounting device (1) according to one of the preceding claims 1 to 6, **characterised in that** the third profile element (14) is connected with the first and/or with the second profile element (11; 12) in such a way, that the at least one pulling element (45; 45, 45'), in the direction of progression of the busbars (3), which are to be installed, can be mounted in front of or behind the holding device (11, 12) in such a way, that a collision between the lift gear (3) and the mounting device is avoided, when the busbars (3) are pulled in.

8. Lift gear (4) at least one busbar (3), which is to be installed in a mounting device (1) according to one of the claims 1 to 6, which comprises a holding device (11, 12) that can be mounted on the ceiling (2) of a building and a bearing element (13) that serves for bearing at least one busbar (3), **characterised in that** at least one holding device (41) is provided that serves for receiving a busbar (3), which holding device (41) is on both sides, by means of a through running pulling element (45) or by means of a single pulling element (45, 45') each, connectable to the mounting elements (115) of the holding device (11, 12) and which by means of the pulling element or pulling elements (45; 45, 45') can be lifted in such a way, that the held busbar (3) is insertable into the holding device (11, 12) and can be locked by means of the bearing element (13).

9. Lift gear (4) according to claim 8, **characterised in that** the holding device (41), that consist of one or more parts, comprises a U-profile, into which the at least one busbar (3) can be laid and/or the holding device (41), that consist of one or more parts, comprises a profile with at least one recess (410), into which at least one of the profile elements (11, 12) of the holding device (11, 12) can be inserted, when the holding device (41) is lifted.

10. Lift gear (4) according to claim 8 or 9, **characterised in that** the holding device (41) comprises two drives (46, 46'), such as rope- or chain winches, or a single drive (46), with which the holding device (41) can be transferred along the pulling elements (45, 45')
or that a single pulling element (45) is provided, which on one end is connectable on one the side of the holding device (11, 12) and, if appropriate seated by means of pulleys (411), is routed under the holding device (41) and further over a pulley (412) that can be mounted on the other side of the holding device (11, 12).

11. Lift gear (4) according to claim 8, 9 or 10, **characterised in that** the holding device (41) is provided with guide elements (48), which are guided along the corresponding parts of the pulling element (45) or along both of the pulling elements (45, 45') respectively, so that the holding device (41), during a vertical movement is stably held and/or that the holding device (41) is connected with a securing device (414), through which the free end of the pulling element (45) is guided and which allows passing of the pulling element (45) only in pulling direction.

12. Lift gear (4) according to one of the claims 8 - 11, **characterised in that** both of the pulling elements (45, 45') or the pulling element (45) respectively and the related pulleys (412) are connectable by means of connecting elements (451) with the holding device (11, 12), preferably with the first profile element (11), which is connectable to the ceiling (2).

## Revendications

1. Dispositif de fixation (1) pour l'installation de barre omnibus (3) dans la zone du plafond (2) d'un bâtiment, avec un dispositif de retenue (11, 12) reliable au plafond (2), un élément porteur (13) servant à porter au moins une barre omnibus (3), **caractérisé en ce que** l'élément porteur (13) peut être monté et démonté sur la face inférieure du dispositif de retenue (11, 12) de sorte que la barre omnibus (3) à installer peut être insérée après le démontage de l'élément porteur (13) perpendiculairement par le bas dans le dispositif de retenue (11, 12) et que l'élément porteur (13) peut être relié après l'insertion de la barre omnibus (2) au dispositif de retenue (11, 12) et que la barre omnibus (2) puisse être abaissée sur l'élément porteur (13).

2. Dispositif de fixation (1) selon la revendication 1, **caractérisé en ce que** le dispositif de retenue (11, 12) présente une première partie profilée (11) reliable au plafond (2) et au moins une seconde partie profilée (12) reposant de préférence verticalement dessus, qui est orientée après le montage du dispositif de retenue (11, 12) au moins approximativement parallèlement à l'axe de gravitation de sorte que l'introduction à effectuer parallèlement à l'axe de gravitation, de la barre omnibus (2) ne soit pas entravée.

3. Dispositif de fixation (1) selon la revendication 2, **caractérisé en ce que** la seconde partie profilée (12) est munie d'ouvertures (125) qui permettent d'y insérer latéralement l'élément porteur (13) ou **en ce que** la seconde partie profilée (12) présente un filetage qui peut être traversé par une ouverture (138) dans l'élément porteur (13) et être relié à un écrou à vis (123).

4. Dispositif de fixation (1) selon la revendication 2 ou 3, **caractérisé en ce que** l'élément porteur (13, 13") n'est reliable qu'avec une seconde ou deux secondes parties profilées (12) et/ou que l'élément porteur (13') se compose de deux parties (131, 132) ajustables entre elles au moyen d'au moins une vis (133).

5. Dispositif de fixation (1) selon l'une des revendications 1 à 4, **caractérisé en ce que** pour le montage parallèle de plusieurs barres omnibus (2) de part et d'autres d'une seconde partie profilée (12), un élément porteur (13") peut être respectivement monté ou **en ce que** deux ou plusieurs secondes parties profilées (12) sont prévues sur lesquelles au moins deux éléments porteurs (13, 13', 13") peuvent être montés sur un côté ou sur les deux cotés.

6. Dispositif de fixation (1) selon l'une des revendications 1 à 5, **caractérisé en ce que**, le dispositif de retenue (11, 12) est relié directement ou de manière coulissante le long d'une glissière (17) au plafond (2) et/ou **en ce que** le dispositif de retenue (11, 12), de préférence la première partie profilée (11) ou une troisième partie profilée (14) est munie d'éléments de montage (115) avec lesquels au moins un élément de traction (45, 45, 45') d'un dispositif de levage (4) peut être relié, de sorte que la barre omnibus à installer (3) après le démontage de l'élément porteur (13) peut être introduite dans le dispositif de retenue (11, 12) verticalement par le bas au moyen d'au moins un élément de traction (45; 45, 45') verticalement par le bas dans le dispositif de retenue (11, 12).

7. Dispositif de fixation (1) selon l'une des revendications 1 à 6, **caractérisé en ce que** la troisième partie profilée (14) est reliée avec la première ou la seconde partie profilée (11, 12) de sorte qu'au moins un élément de traction (45; 45, 45') peut être fixé en direction de la courbe de la barre omnibus à installer (3), devant ou derrière le dispositif de retenue (11, 12) de manière à éviter une collision entre le dispositif de levage (3) et le dispositif de fixation lors de l'insertion de la barre omnibus (3).

8. Dispositif de levage (4) pour au moins une barre omnibus (3), qui est à installer dans un dispositif de fixation (1) selon l'une des revendications 1 à 6 lequel présente un dispositif de retenue (11, 12) reliable au plafond (2) d'un bâtiment et un élément porteur (13) servant à porter au moins une barre omnibus (3) **caractérisé en ce qu'**il est prévu au moins un dispositif porteur (41) servant au logement de la barre omnibus (3), lequel peut être relié de part et d'autres au moyen d'un élément de traction unique (45) ou qui peut être relié de part et d'autres, 45') à des éléments de montage (115) du dispositif de retenue (11, 12) respectivement au moyen d'un élément de traction unique (45, 45') et qui peut être tiré vers le haut au moyen du ou des éléments de traction (45; 45, 45') de sorte que la barre omnibus maintenue (3) peut être introduite dans le dispositif de retenue (11, 12) et être bloquée au moyen de l'élément porteur (13).

9. Dispositif de levage (4) selon la revendication 8, **caractérisé en ce que** le dispositif porteur (41) en une ou plusieurs parties présente un profilé en U dans lequel au moins une barre omnibus (3) peut être insérée et/ou le dispositif porteur (41) en une ou plusieurs parties présente un profilé d'au moins un évidement (410) dans lequel au moins une des parties profilées (11, 12) du dispositif de retenue (11, 12) est insérable pendant le soulèvement du dispositif porteur (41).

10. Dispositif de levage (4) selon la revendication 8 ou 9, **caractérisé en ce que** le dispositif porteur (41) présente deux entraînements (46, 46') tels que des treuils à câble ou à chaînes, ou un seul entraînement (46) au moyen duquel respectivement desquels le dispositif porteur (41) peut être déplacé le long des éléments de traction (45, 45') ou en ce qu'il est prévu un seul élément de traction (45) qui peut être fixé à une extrémité sur un côté du dispositif de retenue (11, 12) et éventuellement logé au moyen de poulies (411), être guidés en dessous du dispositif porteur (41) et être guidé par une poulie (412) fixable sur la face opposée du dispositif de retenue (11, 12).

11. Dispositif de levage (4) selon la revendication 8 ou 9, **caractérisé en ce que** le dispositif porteur (41) est muni d'éléments de guidage (48) qui sont guidés le long des parties respectives d'un élément de traction (45) respectivement le long de deux éléments de traction (45, 45'), de sorte que le dispositif porteur (41) est maintenu stable ou est stable pendant le déplacement vertical et/ou en ce que le dispositif porteur (41) est relié à un dispositif de verrouillage (414) à travers lequel est guidée l'extrémité libre de l'élément de traction (45) et qui ne laisse passer l'élément de traction (45) que dans le sens de traction.

12. Dispositif de levage (4) selon l'une des revendications 8 à 11, **caractérisé en ce que** les deux éléments de traction (45, 45') respectivement l'élément de traction (45) et les poulies respectives (412) sont reliables au moyen d'éléments de liaison (451) au dispositif de retenue (11, 12) de préférence à la première partie profilée (11) reliable au plafond (2).
